# FASCICULE DE BREVET EUROPEEN

(11) **EP 2 951 483 B1**
(45) Date de publication et mention de la délivrance du brevet: **15.03.2017**
(21) Numéro de dépôt: 14706871.2
(22) Date de dépôt: 30.01.2014
(51) Int. Cl.: F16P 3/14, A01G 3/037, B26B 15/00, B23Q 11/00

(54) **OUTIL DE COUPE SÉCURISE ET METHODE POUR SECURISER L'UTILISATION D'UN OUTIL**
SICHERES SCHNEIDWERKZEUG UND VERFAHREN ZUR DARSTELLUNG DER SICHEREN VERWENDUNG EINES WERKZEUGS
SAFE CUTTING TOOL AND METHOD FOR RENDERING THE USE OF A TOOL SAFE

(30) Priorité: 30.01.2013 FR 1350772
(43) Date de publication de la demande: 09.12.2015
(73) Titulaire: Midi Ingenierie, 31100 Toulouse (FR)
(72) Inventeur: PONTHET, Arnaud, F-31500 Toulouse (FR)
(74) Mandataire: Ipside
(86) Numéro de dépôt international: PCT/FR2014/000020
(87) Numéro de publication internationale: WO 2014/118447

(56) Documents cités:
- WO-A1-97/12174
- WO-A1-2010/027598
- DE-A1-102009 045 944
- FR-A1- 2 846 729
- US-A1- 2002 170 399

## Description

### Introduction

La présente invention se rapporte à un outil muni d'un dispositif de sécurité permettant notamment de prévenir les risques de coupures. Elle concerne plus particulièrement, bien que non exclusivement, un outil de coupe, tel un sécateur électronique, apte à détecter un contact entre les éléments de coupes et la peau d'un opérateur, protégé ou non par un élément pouvant aider à la détection tel un gant métallique conducteur, ou d'éléments conducteurs tels que des fils de palissage.

### Art antérieur

Les outils, employés pour couper, trancher, perforer, percer, exposent leur utilisateur à des risques de blessures. Par exemple, des outils présentant de telles caractéristiques sont les outils de coupe de type sécateur, employés dans de nombreux domaines, et notamment dans la viticulture, l'arboriculture, l'élagage, l'entretien d'espaces verts, l'élevage, ou l'agriculture. Certains sont équipés de moteurs entraînant, par l'intermédiaire d'un mécanisme de couplage, des éléments de coupe, sur demande de l'opérateur. Ces outils particulièrement efficaces doivent être manipulés avec précaution pour limiter les risques de blessures, plus particulièrement de coupures, du fait de leur utilisation. De plus, ces dispositifs doivent répondre à diverses règles de sécurité.

Pour sécuriser de tels outils, on connaît en outre des dispositifs d'aide à la sécurité, tels que des dispositifs à double gâchette qui requièrent pour fonctionner l'emploi par l'utilisateur de ses deux mains. On peut encore citer les dispositifs de sécurité nécessitant de relier par un fil les parties du corps à protéger à une électronique de contrôle. Ces dispositifs sont contraignants, et nécessitent une action de l'utilisateur.

Le document de brevet WO2010027598A1 se rapporte au domaine des outils électriques, capable de détecter des contacts entre une lame mobile et un objet, en particulier le doigt ou la main de l'utilisateur. Plus particulièrement, il décrit un système de détection capacitif utilisant un courant d'excitation de la lame et un dispositif de détection de variation de ce courant en cas de contact.

Le document de brevet WO 97/12174 se rapporte à la détection de distance entre deux objets, et en particulier à la protection d'une partie du corps humain ou d'un câble électrique contre l'action d'un outil comme un outil électrique portable. Plus particulièrement, il est décrit un système de sécurité utilisant un signal de proximité, pour la détection de la présence d'un objet lorsque ce dernier est interposé entre la masse/terre et les plaques d'un condensateur.

Le document de brevet US 2002/0170399 A1 décrit un système de détection reposant sur l'utilisation d'un courant de charge appliqué à la partie active de l'outil, la détection d'un contact se faisant en identifiant une chute de la charge.

Le document de brevet DE 10 2009 045 944 se rapporte à un outil électrique portable à ultrasons, muni d'un système de protection par détection de proximité/contact. Les moyens décrits ont pour but de fournir un système de détection adapté à de tels outils. Plus particulièrement, un dispositif est décrit apte à mesurer la variation de la capacité, en cas de contact avec l'outil ultrasonique.

Le document de brevet FR 2 846 729 se rapporte à un dispositif de protection et de sécurité pour les utilisateurs d'outils motorisés à commande électrique dont les paramètres sont ajustables après fabrication.

Toutefois, il existe encore un besoin pour des moyens efficaces de sécurisation de l'utilisation de ce type d'outils, et plus particulièrement, des moyens permettant de limiter les risques encourus lors d'un contact entre des parties du corps humain et les éléments de coupe, sans pour autant limiter l'utilisation de l'outil dans des conditions environnementales différentes et/ou changeantes, en particulier lors d'intempéries, tout en étant robustes en présence de bruits électromagnétiques parasites générés en particulier par d'autres composants de l'outil comme un moteur.

### Résumé de l'invention

Un des objets de l'invention est de fournir un outil, notamment un outil de coupe de type sécateur, apte à détecter de manière fiable et robuste les contacts entre des parties du corps humain et les éléments de coupe, tels que les lames, et, le cas échéant, sécuriser les éléments de coupe, sans toutefois relier les parties du corps humain à l'électronique de contrôle par des fils électriques en particulier. Un autre objet de l'invention est de proposer une telle détection, sans pour autant limiter l'utilisation de l'outil dans des conditions environnementales différentes et/ou changeantes, en particulier lors d'intempéries. Un autre objet de l'invention est de proposer des moyens de détection robustes en présence de bruits électromagnétiques parasites générés en particulier par d'autres composants de l'outil comme un moteur. Un autre objet de l'invention est de proposer des moyens de détection capables de s'adapter à l'environnement et/ou à l'opérateur. Un autre objet de l'invention est de fournir un outil de coupe, apte à détecter de manière fiable et robuste les contacts entre les éléments de coupe et un gant conducteur, des fils de palissage, ou tout autre type d'éléments conducteurs.

Un ou plusieurs de ces objets sont remplis par le dispositif selon la revendication indépendante. Les revendications dépendantes fournissent en outre des solutions à ces objets et/ou d'autres avantages.

Plus particulièrement, selon un premier aspect, l'invention se rapporte à un outil électro portatif muni d'au moins un élément actif. Par élément actif, on entend les moyens actifs permettant de remplir la fonction pour laquelle l'outil est destiné, par exemple des éléments de coupe pour un outil de coupe, un foret pour un outil de perçage, un poinçon pour un outil de perforation, etc.

L'outil comporte un dispositif de sécurité couplé électriquement, via une première interface, à l'élément actif. L'élément actif est isolé du reste de l'électronique de contrôle de l'outil, en particulier de la masse électrique.

Le dispositif de sécurité comprend en outre un détecteur arrangé de sorte à :
- mesurer périodiquement, au niveau de la première interface, une valeur fonction d'une capacité électrique et du contact de l'élément actif avec un corps étranger ;
- comparer la valeur mesurée à une valeur de référence propre à un évènement ;
- délivrer, sur une deuxième interface, un signal de sécurité comportant une information relative audit évènement lorsque l'écart entre la valeur mesurée et la valeur de référence est supérieur à un seuil.

L'évènement est par exemple un contact entre d'une part l'élément actif, par exemple un élément de coupe, et d'autre part, un membre ou la peau d'une personne et/ou un conducteur électrique, tel qu'un fil de palissage. Ainsi, lorsqu'un opérateur touche accidentellement l'élément actif, le dispositif de sécurité est en mesure de détecter une variation de la capacité intrinsèque de l'élément actif et d'envoyer un signal indiquant la détection de cet évènement.

L'outil est par exemple un outil de coupe de type sécateur, en particulier un sécateur électronique, dont il est typiquement fait usage dans le domaine de la viticulture, l'arboriculture, l'élagage, l'entretien d'espaces verts, l'élevage, ou l'agriculture. L'élément actif peut par exemple être un élément de coupe comportant une tête de coupe, optionnellement amovible, munie d'une ou plusieurs lames et/ou d'éléments dentés, métalliques et formant une masse électrique homogène reliée au dispositif de sécurité.

Dans un mode de réalisation, lors d'une phase d'initialisation, le détecteur est configuré de sorte à :
- mesurer une première valeur relative à la capacité intrinsèque de l'élément actif, lorsque l'évènement ne se produit pas ;
- définir la valeur de référence comme égale à la première valeur.

Aussi, le détecteur peut se configurer automatiquement, par exemple à chaque mise sous tension de l'outil. Le détecteur peut s'adapter aux variations de la capacité de l'élément actif liée en particulier à l'environnement. Le détecteur peut être configuré de sorte à mettre à jour périodiquement la valeur de référence. Aussi, en cours d'utilisation, si l'environnement de l'outil évolue, par exemple si les conditions climatiques changent et que l'atmosphère devient plus humide, le dispositif de sécurité est alors en mesure de s'adapter à ces changements.

Plus particulièrement, le détecteur peut être configuré de sorte à mettre à jour la valeur de référence, en appliquant un premier filtre, sur la valeur de référence, le premier filtre étant paramétré de sorte à prendre en compte l'influence des changements de l'environnement de l'outil modifiant la valeur mesurée lorsque l'évènement ne se produit pas.

À titre d'exemple, un filtre peut être employé. En effet, les contacts à détecter, comme le contact de l'élément actif avec de la peau, sont typiquement des contacts courts et correspondant à une valeur présentant une faible variation au cours du temps. Le détecteur peut être également configuré de sorte à initialiser la valeur de référence qu'après la fin d'une phase de mise sous tension de l'outil, afin par exemple de ne pas tenir compte d'éventuelles perturbations et parasites qui peuvent être générés au cours de cette phase.

Dans un mode de réalisation, le détecteur comprend :
- un dispositif de contrôle ;
- un générateur de signal, comprenant un condensateur ayant une première capacité, couplé à la première interface, le générateur de signal étant configuré de sorte à produire une séquence comprenant au moins une impulsion générée en :
   - faisant circuler un courant dans le condensateur de sorte à charger l'élément actif à un premier potentiel ;
   - puis, en déchargeant l'élément actif au potentiel de référence, sans faire circuler de courant dans le condensateur ;
- un dispositif de mesure, apte à mesurer une tension aux bornes du condensateur.

Le dispositif de contrôle est configuré de sorte à :
- piloter le générateur de signal de manière à produire un nombre N de répétitions de la séquence jusqu'à ce que la tension mesurée aux bornes du condensateur soit supérieure ou égale à une tension prédéterminée ;
- comparer le nombre N de répétitions à la valeur de référence propre à l'évènement ;
- lorsque la valeur absolue de la différence entre le nombre N de répétitions et la valeur de référence est supérieure au seuil, délivrer, sur la deuxième interface, le signal de sécurité comportant une information relative audit évènement.

Par exemple, le nombre N est compris entre 1 et 255, lorsque l'évènement est un contact entre d'une part l'élément actif, et d'autre part, un membre ou la peau d'une personne et/ou un conducteur électrique. Le générateur de signal peut être configuré de sorte que les impulsions soient générées à une fréquence comprise entre 100 kHz et 10 MHz.

Dans un mode de réalisation, l'outil comporte un actionneur arrangé pour entraîner l'élément actif, et des moyens de contrôle aptes à piloter l'actionneur. L'actionneur comporte par exemple un moteur électrique alimenté par une batterie électrique ou une alimentation électrique interne ou externe, couplé à des moyens de transmission mécanique apte à entrainer l'élément actif. Les moyens de contrôle sont couplés à la deuxième interface du dispositif de sécurité et configurés de sorte à agir sur l'actionneur et/ou l'élément actif de sorte à appliquer une stratégie de sécurité, tant que le signal de sécurité comporte une information relative à l'évènement. Par stratégie de sécurité, on entend au moins une action ou une série d'actions permettant d'agir sur l'élément actif pour limiter ou réduire l'action de l'élément actif après la survenance de l'évènement. Par exemple dans le cas d'un outil de coupe, la stratégie de sécurité peut comporter les actions nécessaires à la réouverture des éléments de coupe. On peut encore citer d'autres exemples de stratégie de sécurité, par exemple bloquer la rotation de l'élément actif, bloquer l'élément actif, inverser le mouvement de l'élément actif, etc.

Le détecteur peut être configuré de sorte à appliquer un deuxième filtre, sur la valeur mesurée avant comparaison ; le deuxième filtre étant paramétré de sorte à limiter les effets des signaux parasites produits par l'actionneur. En effet, les perturbations typiques engendrées par un actionneur de type moteur sont rapides et de forte amplitude, présentant des coupures régulières.

L'outil peut comporter en outre une interface utilisateur comprenant des moyens aptes à informer un opérateur de la survenance de l'évènement, tant que le signal de sécurité comporte une information relative à l'évènement. Par exemple, un signal visuel et/ou sonore peut être émis lorsque l'élément actif entre en contact avec un fil de palissage afin de le signaler à l'opérateur.

Selon un deuxième aspect, l'invention se rapporte à une méthode pour sécuriser l'utilisation d'un outil selon le premier aspect. La méthode comporte les étapes suivantes :
- mesurer périodiquement, au niveau d'une première interface couplée électriquement à l'élément actif, une valeur fonction d'une capacité électrique et du contact de l'élément actif avec un corps étranger ;
- comparer la valeur mesurée à une valeur de référence propre à un évènement ;
- délivrer, sur une deuxième interface, un signal de sécurité comportant une information relative audit évènement, lorsque l'écart entre la valeur mesurée et la valeur de référence est supérieur à un seuil.

### Brève description des figures

D'autres particularités et avantages de la présente invention apparaîtront dans la description ci-après de modes de réalisation, donnés à titre d'exemples non limitatifs, en référence aux dessins annexés, dans lesquels :
- la figure 1 est un schéma bloc illustrant un outil de coupe selon un mode de réalisation de l'invention ;
- la figure 2 est un schéma bloc d'un dispositif de sécurité adapté à être couplé à un outil de coupe selon un mode de réalisation de l'invention ;
- la figure 3 est diagramme d'une méthode selon l'invention de détection d'un contact potentiellement indésirable avec les éléments de coupe ;
- la figure 4 est un schéma de principe d'un circuit électronique regroupant les fonctions principales d'un dispositif de sécurité selon un mode de réalisation de l'invention ;
- la figure 4a est un schéma de principe détaillant le principe de fonctionnement du circuit électronique illustré à la figure 4 ;
- la figure 5 est un diagramme représentant des étapes mises en oeuvre par le microcontrôleur du dispositif de sécurité selon un mode de réalisation de l'invention pour détecter un contact indésirable.

### Mode préféré de réalisation de l'invention

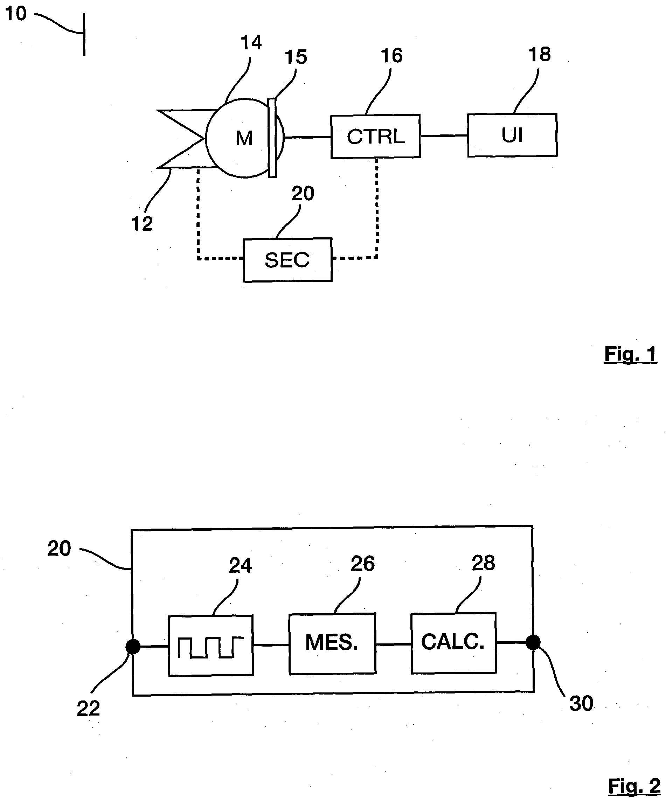

La figure 1 illustre schématiquement un outil de coupe 10, de type sécateur, selon un mode de réalisation de l'invention. L'outil de coupe 10 peut être en particulier un sécateur électronique, dont il est typiquement fait usage dans le domaine de la viticulture, l'arboriculture, l'élagage, l'entretien d'espaces verts, l'élevage, ou l'agriculture. L'outil de coupe 10 comporte au moins un élément de coupe 12 couplé à un actionneur 14. L'élément de coupe 12 peut par exemple comporter une tête de coupe, optionnellement amovible, munie d'une ou plusieurs lames et/ou d'éléments dentés. L'actionneur 14 comporte par exemple un moteur électrique alimenté par une batterie électrique ou une alimentation électrique interne ou externe, couplé à des moyens de transmission mécanique apte à entraîner les éléments de coupe 12. L'outil de coupe 10 comporte en outre des moyens de contrôle 16 ainsi qu'une interface utilisateur 18. Les moyens de contrôle 16 peuvent par exemple comprendre une carte électronique munie d'un dispositif de calcul, tels un microcontrôleur ou un circuit intégré, et d'interfaces pour recevoir d'une part des informations de l'interface utilisateur 18 et d'autre part envoyer des commandes pour piloter l'actionneur 14. L'interface utilisateur 18 peut en outre comprendre une gâchette et/ou un interrupteur pour permettre à l'opérateur d'indiquer qu'il souhaite actionner l'élément de coupe. L'interface utilisateur 18 peut encore comporter des éléments, tels qu'un écran et/ou des diodes électroluminescentes pour permettre à l'utilisateur de connaître l'état de l'outil de coupe 10 et éventuellement le configurer. L'outil de coupe 10 comporte en outre un dispositif de sécurité 20 couplé électriquement d'une part à l'élément de coupe 12 et d'autre part aux moyens de contrôle 16. Dans un mode de réalisation (non représenté sur les figures), le dispositif de sécurité 20 est intégré dans les moyens de contrôle 16 : en particulier, les fonctions réalisées par le dispositif de sécurité peuvent être mises en oeuvre à l'aide du dispositif de calcul des moyens de contrôle 16. Le dispositif de sécurité 20 est configuré de sorte à détecter le contact, sur les éléments de coupe 12, de certains objets ou corps, par exemple un membre d'un opérateur tel un doigt, ou encore d'éléments conducteur électrique tels que des fils de palissage, et agir sur l'actionneur 14 et/ou l'élément de coupe 12 et/ou sur les moyens de contrôle 16, de sorte à sécuriser le mouvement de l'élément de coupe. L'outil comporte en outre des moyens d'isolation électrique permettant d'isoler l'élément actif du reste de l'électronique de contrôle de l'outil, en particulier de la masse électrique.

Comme illustré sur la figure 2, le dispositif de sécurité 20 selon un mode de réalisation comporte une première interface 22, adaptée à être couplée électriquement à l'élément de coupe 12, ainsi qu'une deuxième interface 30. Le dispositif de sécurité 20 comprend en outre un générateur de signal 24, un dispositif de mesure 26, et un dispositif de contrôle 28. Le générateur de signal 24 est couplé électriquement à la première interface 22. Le dispositif de contrôle 28 est arrangé de sorte à générer sur la deuxième interface 30 un signal de sécurité SSEC. Le dispositif de sécurité 20 permet en outre de détecter des variations de la capacité C des éléments de coupe 12, de discriminer parmi lesdites variations lesquelles correspondent à un contact potentiellement indésirable, et le cas échéant émettre une information dans le signal de sécurité SSEC indiquant la détection d'un contact potentiellement indésirable et/ou comportant une commande apte à arrêter/bloquer/inverser le mouvement de l'élément de coupe 12.

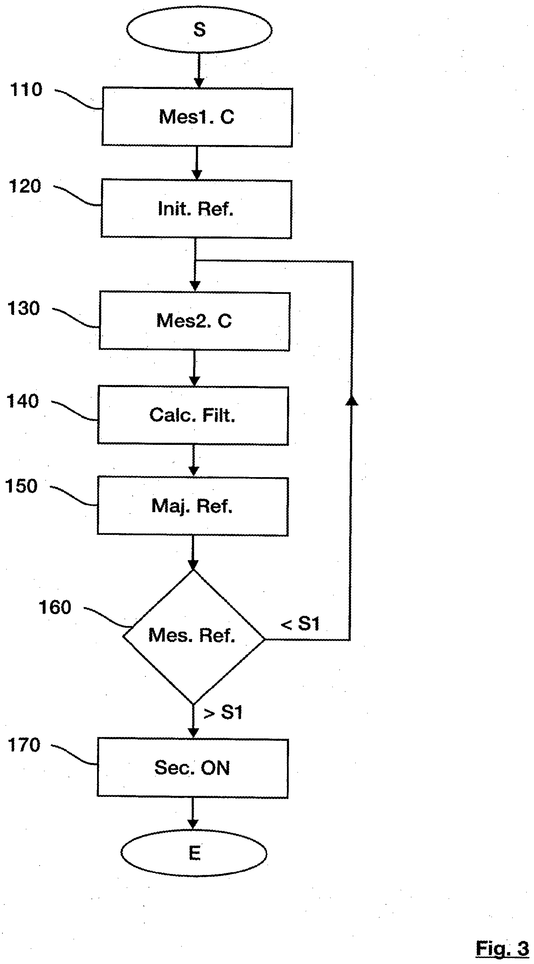

Un mode de réalisation, illustré sur la figure 3, d'une méthode de détection d'un contact potentiellement indésirable avec l'élément de coupe 12 est décrit ci-après. Cette méthode peut en particulier être mise en oeuvre par le dispositif de sécurité 20.

La méthode comprend une première étape 110 au cours de laquelle une première valeur M1 relative à la capacité C intrinsèque de l'élément de coupe 12 est mesurée. Alternativement, la première valeur M1 peut être initialisée à une valeur prédéfinie. La première étape 110 est réalisée lorsqu'aucun élément n'est en contact avec l'élément de coupe 12. Elle peut en particulier être mise en oeuvre lors de la mise sous tension de l'outil de coupe 10.

Dans une deuxième étape 120, la première valeur M1 déterminée au cours de la première étape 110, est mémorisée comme valeur de référence REF.

Au cours d'une troisième étape 130, une deuxième valeur M2 relative à la capacité C intrinsèque de l'élément de coupe 12 est mesurée.

Dans une quatrième étape 140 optionnelle, la deuxième valeur M2 est filtrée. Le filtre employé a notamment pour fonction d'écarter les mesures qui pourraient s'avérer incohérentes ou parasitées afin d'augmenter la fiabilité globale de la méthode, et limiter les faux positifs. À titre d'exemple, le filtre peut être arrangé de sorte à limiter l'effet sur la deuxième valeur M2 des parasites électriques susceptibles d'être présents dans le circuit électrique de l'outil de coupe, générés par exemple par l'actionneur 14. Dans ce dernier exemple, il est par exemple possible d'utiliser un filtre pour discriminer les bruits parasites engendrés par l'actionneur 14. En effet, les perturbations typiques engendrées par un actionneur de type moteur sont typiquement rapides et de forte amplitude, présentant des coupures régulières.

Dans une cinquième étape 150 optionnelle, la valeur de référence REF est mise à jour. La cinquième étape 150 vise à prendre en compte l'influence des changements de l'environnement de l'outil de coupe 10 susceptible de modifier la capacité C intrinsèque de l'élément de coupe 12. Des changements climatiques, tels que le passage d'un temps sec à un temps humide, sont susceptibles d'engendrer de telles fluctuations de la capacité C intrinsèque. Plus particulièrement, la valeur de référence REF peut être mise à jour par filtrage. À titre d'exemple, un filtre peut être employé. Les contacts à détecter, comme le contact de l'élément de coupe avec de la peau, étant typiquement des contacts courts et correspondant à une valeur typique présentant une faible variation au cours du temps, il est possible de mettre à jour la valeur de référence en appliquant un tel filtre. Une temporisation peut en outre être mise en oeuvre afin de garantir que la valeur de référence REF ne puisse être mise à jour au cours de l'étape 150 qu'après l'écoulement de ladite temporisation. Ainsi, l'écoulement d'un délai après la mise sous tension de l'outil de coupe peut être mis en oeuvre, afin d'éviter notamment de prendre en compte d'éventuelles perturbations susceptibles de se produire au cours d'une période d'initialisation.

Au cours d'une sixième étape 160, la deuxième valeur MF2, éventuellement filtrée au cours de la quatrième étape 140, est comparée à la valeur de référence REF, éventuellement filtrée au cours de la cinquième étape 150. Pour cela, on compare la différence entre la valeur de référence REF et un seuil S1. Si *MF2>REF-S1,* il est considéré qu'aucun contact non souhaitable ne s'est produit, et la méthode se poursuit en reprenant à la troisième étape 130 de mesure de la deuxième valeur M2. Dans le cas contraire, si *MF2<REF-S1,* il est considéré qu'un contact non souhaitable s'est produit. La méthode se poursuit alors dans une septième étape 170, au cours de laquelle un signal de sécurité SSEC est généré comportant l'information qu'un contact indésirable s'est produit. Il est en outre possible de bloquer la mise de la valeur de référence REF au cours de l'étape 150, tant que *MF2<REF-S1,* et/ou que le signal de sécurité comportant l'information qu'un contact indésirable s'est produit est généré.

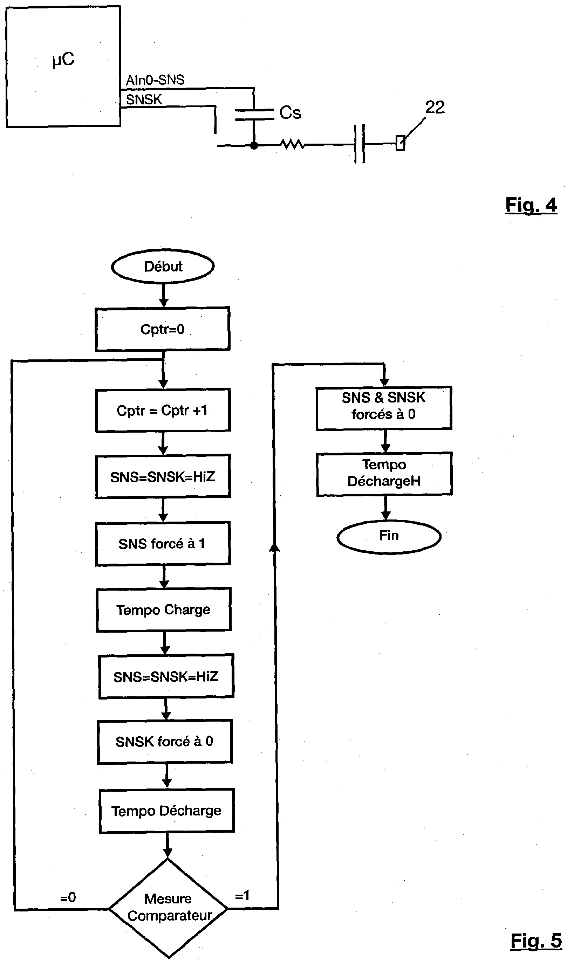

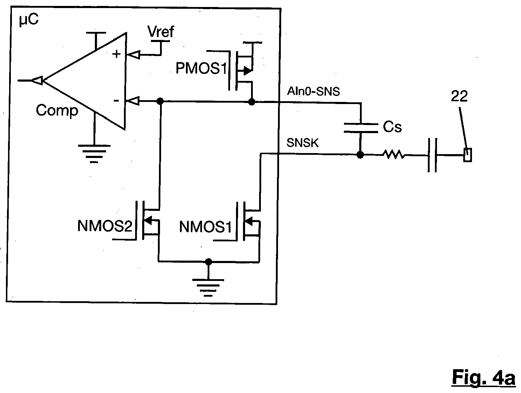

Un mode de réalisation particulier du dispositif de sécurité 20 va maintenant être décrit en se référant en outre à la figure 4 représentant le schéma de principe d'un circuit électronique regroupant les fonctions du générateur de signal 24, du dispositif de mesure 26, et du dispositif de contrôle 28, et à la figure 5 montrant les étapes principales d'une méthode pour mesurer les variations de charge sur la première interface 22. En particulier, le circuit comprend un microcontrôleur comprenant une sortie délivrant un signal délivrant une information relative à la détection/l'absence de détection d'une variation de charge sur la première interface 22. La deuxième interface 30, dans l'exemple de la figure 2, est notamment couplée à une diode électroluminescente, qui s'allume lorsqu'un contact potentiellement indésirable a été détecté. En se référant à la figure 4a, le fonctionnement interne du microcontrôleur va maintenant être détaillé, notamment en ce qui concerne l'implémentation du générateur de signal 24 et du dispositif de mesure 26. Au sein du microcontrôleur, un transistor PMOS1 est arrangé de sorte à permettre de charger un élément actif en faisant circuler un courant dans le condensateur Cs. Un transistor NMOS1 est arrangé de sorte à permettre de décharger l'élément actif, sans faire circuler un courant dans le condensateur Cs. Les transistors NMOS1 et NMOS2 sont arrangés pour permettre de décharger le condensateur Cs à 0V, lorsque les transistors NMOS1 et NMOS2 sont saturés. Un comparateur COMP est arrangé pour mesurer la tension aux bornes du condensateur Cs, lorsque le transistor NMOS1 est saturé.

Le principe général d'un mode de réalisation détection de la variation de capacité mesurée pour l'élément de coupe 12 va maintenant être décrit. Le port SNS est initialisé à 1, le port SNSK à 0. Les registres de direction de SNS et de SNSK sont commutés de sorte à passer à haute impédance. Le temps théorique nécessaire aux transferts de charges est de l'ordre de 1 µs, et dépend de la masse mécanique. La mesure de la tension U aux bornes du condensateur de capacité Cs est réalisée après le changement du registre de direction de SNSK forcé à 1. Un comparateur analogique compris dans le microcontrôleur et référencé avec une tension interne au microcontrôleur est utilisé pour cette tâche. L'entrée SNS est aussi routée sur l'entrée analogique Aln0 du comparateur. Une attente de quelques cycles (instructions NOP) est mise en oeuvre pour attendre la stabilisation du signal sur les entrées du comparateur. La capacité Cs est choisie d'autant plus grande que la résolution souhaitée est grande. Le temps de décharge de la capacité Cs n'étant pas négligeable, une temporisation de la mise à la masse de SNS et SNSK est introduite après chaque bloc d'impulsions. La consommation liée à ce type de mesure dépend de la fréquence des mesures et de la capacité Cs.

La résistance Rs montée en série avec la première interface permet en outre d'obtenir une mesure fiable et de limiter les perturbations lors des phases de décharges de la masse mécanique. Un condensateur de découplage est monté en série entre la première interface 22 et la résistance Rs, permettant de protéger la résistance série en cas de fuite permanente d'un dispositif couplé via la première interface.

## Revendications

1. Outil (10) muni d'au moins un élément actif (12), comportant un dispositif de sécurité (20) couplé électriquement, via une première interface (22), à l'élément actif (12), le dispositif de sécurité comprenant en outre un détecteur (24, 26, 28) arrangé de sorte à :
- mesurer périodiquement, au niveau de la première interface (22), une valeur (M2 ; MF2) fonction d'une capacité électrique et du contact de l'élément actif avec un corps étranger ;
- comparer la valeur mesurée (M2 ; MF2) à une valeur de référence (REF+S1 ; REFF+S1) propre à un évènement ;
- délivrer, sur une deuxième interface (30), un signal de sécurité (SSEC) comportant une information relative audit évènement, lorsque l'écart entre la valeur mesurée (M2 ; MF2) et la valeur de référence (REF ; REFF) est supérieur à un seuil (S1), ledit outil étant **caractérisé en ce que** le détecteur (24, 26, 28) comprend :
- un dispositif de contrôle (28) ;
- un générateur de signal (24), comprenant un condensateur ayant une première capacité (Cs), couplé à la première interface (22), le générateur de signal étant configuré de sorte à produire une séquence comprenant au moins une impulsion générée en :
- faisant circuler un courant dans le condensateur de sorte à charger l'élément actif (12) à un premier potentiel (Vcc) ;
- puis, en déchargeant l'élément actif au potentiel de référence (Gnd) ;
- un dispositif de mesure (26), apte à mesurer une tension aux bornes du condensateur ;
le dispositif de contrôle étant configuré de sorte à :
- piloter le générateur de signal (24) de manière à produire un nombre N de répétitions de la séquence jusqu'à ce que la tension mesurée aux bornes du condensateur soit supérieure ou égale à une tension prédéterminée (U) ;
- comparer le nombre N de répétitions à la valeur de référence (REF ; REFF) propre à l'évènement ;
- lorsque la valeur absolue de la différence entre le nombre N de répétitions et la valeur de référence (REF ; REFF) est supérieure au seuil (S1), délivrer, sur la deuxième interface (30), le signal de sécurité (SSEC) comportant une information relative audit évènement.

2. Outil selon la revendication 1, dans lequel, lors d'une phase d'initialisation, le détecteur est configuré de sorte à
- mesurer une première valeur (M1) relative à la capacité intrinsèque de l'élément actif (12), lorsque l'évènement ne se produit pas ;
- définir la valeur de référence (REF ; RREF) comme égale à la première valeur.

3. Outil selon la revendication 1 ou la revendication 2, dans lequel le détecteur est configuré de sorte à mettre à jour périodiquement la valeur de référence (REF).

4. Outil selon la revendication 3, dans lequel le détecteur est configuré de sorte à mettre à jour la valeur de référence (REF), en appliquant un premier filtre, sur la valeur de référence (REF), le premier filtre étant paramétré de sorte à prendre en compte l'influence des changements de l'environnement de l'outil (10) modifiant la capacité de l'élément actif (12) lorsque l'évènement ne se produit pas.

5. Outil selon l'une quelconque des revendications 2 à 4, dans lequel le détecteur est configuré de sorte à ne modifier la valeur de référence (REF) qu'après la fin d'une phase de mise sous tension de l'outil.

6. Outil selon la revendication 1, dans lequel le nombre N est compris entre 1 et 255, lorsque l'évènement est un contact entre d'une part l'élément actif (12), et d'autre part, un membre ou la peau d'une personne et/ou un conducteur électrique.

7. Outil selon la revendication 1, dans lequel le générateur de signal (24) est configuré de sorte que les impulsions soient générées à une fréquence comprise entre 100 kHz et 10 MHz.

8. Outil selon l'une quelconque des revendications 1 à 7, comportant un actionneur (14) arrangé pour entraîner les éléments actifs (12), et des moyens de contrôle (16) aptes à piloter l'actionneur (14), les moyens de contrôle (16) étant couplés à la deuxième interface (30) du dispositif de sécurité et configurés de sorte à agir sur l'actionneur (14) et/ou l'élément actif (12) de sorte à appliquer une stratégie de sécurité, tant que le signal de sécurité (SSEC) comporte une information relative à l'évènement.

9. Outil selon la revendication 8, dans lequel le détecteur est configuré de sorte à appliquer un deuxième filtre, sur la valeur (MF2) mesurée avant comparaison ; le deuxième filtre étant paramétré de sorte à limiter les effets des signaux parasites produits par l'actionneur (14).

10. Outil selon l'une quelconque des revendications 1 à 9, comportant en outre une interface utilisateur (18) comprenant des moyens aptes à informer un opérateur de la survenance de l'évènement, tant que le signal de sécurité (SSEC) comporte une information relative à l'évènement.

11. Outil selon l'une quelconque des revendications 1 à 10, dans lequel l'évènement est un contact entre d'une part l'élément actif (12), et d'autre part, un membre ou la peau d'une personne et/ou un conducteur électrique.

12. Méthode pour sécuriser l'utilisation d'un outil (10) selon la revendication 1 muni d'au moins un élément actif (12), **caractérisée en ce qu'**elle comporte les étapes suivantes :
- mesurer (130) périodiquement, au niveau d'une première interface (22) couplée électriquement à l'élément actif (12), une valeur (M2 ; MF2) fonction d'une capacité électrique et du contact de l'élément actif avec un corps étranger ;
- comparer (160) la valeur mesurée (M2 ; MF2) à une valeur de référence (REF ; REFF) propre à un évènement ;
- délivrer, sur une deuxième interface (30), un signal de sécurité (SSEC) comportant une information relative audit évènement, lorsque l'écart entre la valeur mesurée (M2 ; MF2) et la valeur de référence (REF ; REFF) est supérieure à un seuil (S1).

## Patentansprüche

1. Werkzeug (10), das mit mindestens einem aktiven Element (12) ausgestattet ist, umfassend eine Sicherheitsvorrichtung (20), die über eine erste Schnittstelle (22) elektrisch an das aktive Element (12) angeschlossen ist, wobei die Sicherheitsvorrichtung ferner einen Detektor (24, 26, 28) aufweist, der derart angeordnet ist, dass:
- an der ersten Schnittstelle (22) regelmäßig ein Wert (M2; MF2) gemessen wird, der von einer elektrischen Kapazität und von dem Kontakt des aktiven Elements mit einem Fremdkörper abhängt;
- der gemessene Wert (M2; MF2) mit einem Referenzwert (REF+S1; REFF+S1), der einem Ereignis eigen ist, verglichen wird;
- auf einer zweiten Schnittstelle (30) ein Sicherheitssignal (SSEC) ausgegeben wird, das eine Information über das Ereignis aufweist, wenn die Abweichung zwischen dem gemessenen Wert (M2; MF2) und dem Referenzwert (REF; REFF) größer als ein Schwellenwert (S1) ist, wobei das Werkzeug, **dadurch gekennzeichnet ist, dass** der Detektor (24, 26, 28) Folgendes aufweist:
- eine Kontrollvorrichtung (28),
- einen Signalgenerator (24), umfassend einen Kondensator mit einer ersten Kapazität (Cs), der an die erste Schnittstelle (22) angeschlossen ist, wobei der Signalgenerator derart konfiguriert ist, dass er eine Sequenz erzeugt, die mindestens einen Impuls aufweist, der erzeugt wird, indem:
- ein Strom in dem Kondensator derart fließen gelassen wird, dass das aktive Element (12) auf ein erstes Potential (Vcc) aufgeladen wird;
- und dann, indem das aktive Element auf das Referenzpotential (Gnd) entladen wird;
- eine Messvorrichtung (26), die geeignet ist, eine Spannung an den Klemmen des Kondensators zu messen;
wobei die Kontrollvorrichtung derart konfiguriert ist, dass sie:
- den Signalgenerator (24) derart steuert, dass eine Anzahl N an Wiederholungen der Sequenz erzeugt wird, bis die Spannung, die an den Klemmen des Kondensators gemessen wird, höher als oder gleich eine(r) vorbestimmte(n) Spannung (U) ist;
- die Anzahl N an Wiederholungen mit dem Referenzwert (REF; REFF), der dem Ereignis eigen ist, vergleicht;
- wenn der absolute Wert des Unterschieds zwischen der Anzahl N an Wiederholungen und dem Referenzwert (REF; REFF) größer als ein Schwellenwert (S1) ist, auf der zweiten Schnittstelle (30) das Sicherheitssignal (SSEC) ausgibt, das eine Information über das Ereignis aufweist.

2. Werkzeug nach Anspruch 1, wobei der Detektor während einer Initialisierungsphase derart konfiguriert ist, dass er
- einen ersten Wert (M1) in Bezug auf die intrinsische Kapazität des aktiven Elements (12) misst, wenn das Ereignis nicht eintritt;
- den Referenzwert (REF; REFF) als gleich dem ersten Wert definiert.

3. Werkzeug nach Anspruch 1 oder 2, wobei der Detektor derart konfiguriert ist, dass er den Referenzwert (REF) regelmäßig aktualisiert.

4. Werkzeug nach Anspruch 3, wobei der Detektor derart konfiguriert ist, dass er den Referenzwert (REF) aktualisiert, indem er einen ersten Filter auf den Referenzwert (REF) anwendet, wobei der erste Filter derart parametriert ist, dass der Einfluss der Änderungen der Umgebung des Werkzeugs (10) berücksichtigt wird, die die Kapazität des aktiven Elements (12) ändern, wenn das Ereignis nicht eintritt.

5. Werkzeug nach einem der Ansprüche 2 bis 4, wobei der Detektor derart konfiguriert ist, dass er den Referenzwert (REF) nur nach dem Ende einer Phase des Unterspannungsetzens des Werkzeugs ändert.

6. Werkzeug nach Anspruch 1, wobei die Anzahl N zwischen 1 und 255 liegt, wenn das Ereignis ein Kontakt zwischen einerseits dem aktiven Element (12) und andererseits einer Gliedmaße oder der Haut einer Person und/oder einem elektrischen Leiter ist.

7. Werkzeug nach Anspruch 1, wobei der Signalgenerator (24) derart konfiguriert ist, dass die Impulse mit einer Frequenz erzeugt werden, die zwischen 100 kHz und 10 MHz liegt.

8. Werkzeug nach einem der Ansprüche 1 bis 7, umfassend einen Aktuator (14), der angeordnet ist, um die aktiven Elemente (12) anzutreiben, und Kontrollmittel (16), die geeignet sind, den Aktuator (14) zu steuern, wobei die Kontrollmittel (16) an die zweite Schnittstelle (30) der Sicherheitsvorrichtung angeschlossen sind und derart konfiguriert, dass sie auf den Aktuator (14) und/oder das aktive Element (12) derart einwirken, dass eine Sicherheitsstrategie angewendet wird, solange das Sicherheitssignal (SSEC) eine Information über das Ereignis aufweist.

9. Werkzeug nach Anspruch 8, wobei der Detektor derart konfiguriert ist, dass er einen zweiten Filter auf den Wert (MF2), der vor dem Vergleichen gemessenen wird, anwendet, wobei der zweite Filter derart parametriert ist, dass die Auswirkungen der Störsignale, die durch den Aktuator (14) erzeugt werden, begrenzt werden.

10. Werkzeug nach einem der Ansprüche 1 bis 9, ferner umfassend eine Benutzerschnittstelle (18), die Mittel aufweist, die geeignet sind, eine Bedienperson über das Eintreten eines Ereignisses zu informieren, solange das Sicherheitssignal (SSEC) eine Information über das Ereignis aufweist.

11. Werkzeug nach einem der Ansprüche 1 bis 10, wobei das Ereignis ein Kontakt zwischen einerseits dem aktiven Element (12) und andererseits einer Gliedmaße oder der Haut einer Person und/oder einem elektrischen Leiter ist.

12. Verfahren zum Sichern der Verwendung eines Werkzeugs (10) nach Anspruch 1, das mit mindestens einem aktiven Element (12) versehen ist, **dadurch gekennzeichnet, dass** es die folgenden Schritte aufweist:
- regelmäßiges Messen (130) an der ersten Schnittstelle (22), die an das aktive Element (12) elektrisch angeschlossen ist, eines Wertes (M2; MF2), der von einer elektrischen Kapazität und von dem Kontakt des aktiven Elements mit einem Fremdkörper abhängt;
- Vergleichen (160) des gemessenen Wertes (M2; MF2) mit einem Referenzwert (REF; REFF), der einem Ereignis eigen ist;
- Ausgeben auf einer zweiten Schnittstelle (30) eines Sicherheitssignals (SSEC), das eine Information über das Ereignis aufweist, wenn die Abweichung zwischen dem gemessenen Wert (M2; MF2) und dem Referenzwert (REF; REFF) größer als ein Schwellenwert (S1) ist.

## Claims

1. Tool (10) provided with at least one active element (12), comprising a safety device (20) coupled electrically, via a first interface (22), to the active element (12), the safety device further comprising a detector (24, 26, 28) arranged so as to:
- periodically measure, at the first interface (22), a value (M2; MF2) that is a function of an electrical capacitance and of the contact of the active element with a foreign body;
- comparing the measured value (M2; MF2) to a reference value (REF+S1; REFF+S1) specific to an event;
- delivering, on a second interface (30), a safety signal (SSEC) comprising information relative to said event, when the deviation between the measured value (M2; MF2) and the reference value (REF; REFF) is above a threshold (S1), said tool being **characterized in that** the detector (24, 26, 28) comprises:
- a control device (28);
- a signal generator (24), comprising a capacitor having a first capacitance (Cs), coupled to the first interface (22), the signal generator being configured so as to produce a sequence comprising at least one pulse generated by:
- making a current flow in the capacitor so as to charge the active element (12) to a first potential (Vcc);
- then, by discharging the active element to the reference potential (Gnd);
- a measurement device (26), capable of measuring a voltage at the terminals of the capacitor;
the control device being configured so as to:
- drive the signal generator (24) so as to produce a number N of repetitions of the sequence until the voltage measured at the terminals of the capacitor is above or equal to a predetermined voltage (U);
- compare the number N of repetitions to the reference value (REF; REFF) specific to the event;
- when the absolute value of the difference between the number N of repetitions and the reference value (REF; REFF) is above the threshold (S1), deliver, on the second interface (30), the safety signal (SSEC) comprising information relative to said event.

2. Tool according to Claim 1, in which, during an initialization phase, the detector is configured so as to
- measure a first value (M1) relative to the intrinsic capacitance of the active element (12), when the event does not occur;
- define the reference value (REF; RREF) as equal to the first value.

3. Tool according to Claim 1 or Claim 2, in which the detector is configured so as to periodically update the reference value (REF).

4. Tool according to Claim 3, in which the detector is configured so as to update the reference value (REF), by applying a first filter to the reference value (REF), the first filter being parameterized so as to take account of the influence of the changes of the environment of the tool (10) modifying the capacitance of the active element (12) when the event does not occur.

5. Tool according to any one of Claims 2 to 4, in which the detector is configured so as to modify the reference value (REF) only after the end of a tool power-up phase.

6. Tool according to Claim 1, in which the number N lies between 1 and 255 when the event is a contact between, on the one hand, the active element (12), and on the other hand, a limb or the skin of a person and/or an electrical conductor.

7. Tool according to Claim 1, in which the signal generator (24) is configured such that the pulses are generated at a frequency lying between 100 kHz and 10 MHz.

8. Tool according to any one of Claims 1 to 7, comprising an actuator (14) arranged to drive the active elements (12), and control means (16) capable of driving the actuator (14), the control means (16) being coupled to the second interface (30) of the safety device and configured so as to act on the actuator (14) and/or the active element (12) so as to apply a safety strategy, as long as the safety signal (SSEC) comprises information relative to the event.

9. Tool according to Claim 8, in which the detector is configured so as to apply a second filter to the value (MF2) measured before comparison; the second filter being parameterized so as to limit the effects of the spurious signals produced by the actuator (14).

10. Tool according to any one of Claims 1 to 9, further comprising a user interface (18) comprising means capable of informing an operator of the occurrence of the event, as long as the safety signal (SSEC) comprises information relative to the event.

11. Tool according to any one of Claims 1 to 10, in which the event is a contact between, on the one hand, the active element (12), and, on the other hand, a limb or the skin of a person and/or an electrical conductor.

12. Method for rendering safe the use of a tool (10) according to Claim 1, provided with at least one active element (12), **characterized in that** it comprises the following steps:
- periodically measuring (130), at a first interface (22) coupled electrically to the active element (12), a value (M2; MF2) that is a function of an electrical capacitance and of the contact of the active element with a foreign body;
- comparing (160) the measured value (M2; MF2) to a reference value (REF; REFF) specific to an event;
- delivering, on a second interface (30), a safety signal (SSEC) comprising information relative to said event, when the deviation between the measured value (M2; MF2) and the reference value (REF; REFF) is above a threshold (S1).
